# EUROPÄISCHE PATENTSCHRIFT

(11) **EP 1 749 718 B1**
(45) Veröffentlichungstag und Bekanntmachung des Hinweises auf die Patenterteilung: **18.05.2011**
(21) Anmeldenummer: 06012697.6
(22) Anmeldetag: 21.06.2006
(51) Int. Cl.: B60S 1/34, B60S 1/52

(54) **Scheibenreinigungsanlage für Fahrzeuge**
Vehicle window cleaning unit
Unité de lavage de vitres pour véhicules

(30) Priorität: 01.08.2005 DE 102005036014
(43) Veröffentlichungstag der Anmeldung: 07.02.2007
(73) Patentinhaber: Volkswagen Aktiengesellschaft, 38436 Wolfsburg (DE)
(72) Erfinder: Penning, Hans-Peter, 38442 Wolfsburg (DE)

(56) Entgegenhaltungen:
- EP-A2- 1 088 719
- DE-A1- 10 044 896
- GB-A- 2 091 544

## Beschreibung

Die Erfindung betrifft eine Scheibenreinigungsanlage für Fahrzeuge, die eine Spritzdüsenanordnung an der Wischerwelle eines Scheibenwischers für einen Waschflüssigkeitsauftrag auf die zu reinigende Fahrzeugscheibe aufweist, insbesondere eine Heckscheibenwischeranlage.

Durch eine Spritzdüsenanordnung an einem Scheibenwischer, insbesondere an dessen Wischerwelle, kann der Verbrauch an Waschflüssigkeit gegenüber einer Spritzdüsenanordnung an der Fahrzeugkarosserie gesenkt werden, weil die Waschflüssigkeit definierter und gezielter einsetzbar ist. Auch ist der Waschflüssigkeitsauftrag weitgehend unabhängig von der Fahrgeschwindigkeit und einer Windbeaufschlagung, und das optische Erscheinungsbild des Fahrzeugs wird verbessert. Dabei gelangen bezüglich der Waschflüssigkeitszuführung zum Wischerarm Lösungen zum Einsatz, bei denen die jeweilige Wischerwelle zum Antrieb des Scheibenwischers mit einem Waschflüssigkeitskanal versehen ist, durch den die Waschflüssigkeit zu der am wischerarmseitigen Ende der Wischerwelle angeordneten Spritzdüse gefördert wird.

Aus der US 2 609 561 ist eine Scheibenreinigungsanlage bekannt, bei der an der wischerarmseitigen Stirnseite einer als Hohlwelle ausgeführten Wischerwelle ein Düsenkörper mit einer Spritzdüse angeschraubt ist, der der Pendelbewegung der Wischerwelle folgt. Dabei nimmt die Spritzdüse eine zum Wischerarm vorbestimmte Position ein, so dass der Waschflüssigkeitsstrahl bei einer Wischerarmbewegung definiert zu diesem auf die Scheibe trifft. Die Waschflüssigkeitszufuhr erfolgt über einen flexiblen Schlauch, der an der fahrzeuginnenseitigen Stirnseite der Wischerwelle angekoppelt ist und der beim Betrieb der Scheibenwischeranlage die Pendelbewegung der Wischerwelle mit vollzieht.

Aus der DE 35 23 441 und der DE 39 07 967 A1 sind Scheibenreinigungsanlagen bekannt, bei denen die jeweilige Wischerwelle als Hohlwelle ausgebildet und durch diese ein fahrzeugfest gehaltertes Rohr hindurchgeführt ist, das einen Zuführkanal für eine Waschflüssigkeit ausbildet und das an seinem wischerarmseitigen Ende eine Spritzdüse trägt. Dieses Rohr folgt der Pendelbewegung der Wischerwelle nicht. Bei der Scheibenwischeranlage nach der DE 35 23 441 ragt die Spritzdüse über eine die Verbindung zwischen der Wischerwelle und dem Befestigungsteil für den Wischerarm abdeckende Abdeckkappe hinaus, so dass abwechselnd Scheibenbereiche vor und hinter dem sich bewegenden Wischerarm benetzt werden, was mit einem erhöhten Waschflüssigkeitsauftrag verbunden ist. Bei der Scheibenwischeranlage nach der DE 39 07 967 A1 mündet der Zuführkanal in eine zugleich als Düsenkörper ausgebildete Abdeckkappe, die drehfest mit der Wischerwelle verbunden ist. Die Spritzdüse hat dabei eine vorbestimmte Stellung zum Wischerarm und pendelt mit, so dass der Waschflüssigkeitsstrahl in der vorbestimmten Winkelstellung der Spritzdüse zur Längsachse des Wischerarmes vor diesem auf die Scheibe trifft. Der Waschflüssigkeitsauftrag erfolgt somit nur auf einer Seite des Wischerarmes.

Die DE 100 44 896 A1 betrifft eine Scheibenreinigungsanlage für ein Fahrzeug gemäß dem Oberbegriff des Anspruches 1 mit zumindest einem von einer Antriebswelle angetriebenen Wischarm, der mit einem Wischblatt über eine Windschutzscheibe bewegbar ist, und mit einer Sprühvorrichtung, mit der über zumindest eine Sprühdüse Reinigungsmittel aus einem Vorratsbehälter vor eine Längsseite des Wischblatts auf die Windschutzscheibe sprühbar ist. die Sprühvorrichtung sprüht das Reinigungsmittel über eine mechanische Steuervorrichtung gesteuert nur vor die Längsseite des Wischblatts, wenn diese in die Bewegungsrichtung des Wischblatts weist.

Es ist Aufgabe der Erfindung, eine Scheibenreinigungsanlage für Fahrzeuge mit einer Spritzdüsenanordnung an der jeweiligen Wischerwelle nach dem Oberbegriff des Anspruchs 1 so zu gestalten, dass die Reinigungswirkung bei einer Senkung des Waschflüssigkeitsverbrauchs erhöht wird.

Diese Aufgabe wird bei einer Scheibenreinigungsanlage nach dem Oberbegriff des Anspruchs 1 durch dessen kennzeichnende Merkmale gelöst. Vorteilhafte Ausgestaltungen sind in den Unteransprüchen aufgeführt.

Die Erfindung betrifft eine Scheibenreinigungsanlage, die in bekannter Weise wenigstens einen Wischerarm, eine als Hohlwelle ausgebildete Wischerwelle, eine in dieser angeordnete Waschflüssigkeitsleitung und eine Spritzdüsenanordnung im Bereich des wischerarmseitigen Endes der Wischerwelle aufweist. Der Waschflüssigkeitsleitung ist ein Verteilerelement mit einer umfangsseitig angeordneten und einen vorbestimmten Öffnungswinkel aufweisenden Austrittsöffnung zugeordnet und dieses ist mit einem koaxial zu diesem angeordneten Düsenkörper wirkverbunden, der zur Verteilung der Waschflüssigkeit abwechselnd auf jeweils die eine oder die andere Seite des Wischerarmes mit Spritzkanälen und in diesen eingesetzten Spritzdüsen versehen ist. Bei einer Antriebsbewegung der Wischerwelle wird der Düsenkörper relativ und derart zum Verteilerelement verdreht, dass jeweils die auf einen Bereich vor den bewegten Wischerarm gerichtete Spritzdüse mit der Austrittsöffnung verbunden ist. Bei einer Hin- und Her-Pendelbewegung der Wischerwelle und damit des Wischerarmes werden somit die Spritzkanäle abwechselnd geöffnet und verschlossen, wobei jeweils der in der Bewegungsrichtung des Wischerarmes auf einen Bereich vor diesen gerichtete Spritzkanal geöffnet ist.

Eine derartige Scheibenreinigungsanlage mit der getroffenen Spritzdüsenanordnung und Beaufschlagung der jeweiligen zu reinigenden Fahrzeugscheibe mit Waschflüssigkeit wird diese bei einem Sprühvorgang unabhängig von der Bewegungsrichtung des jeweiligen Scheibenwischers stets vor den Wischerarm bzw. das an diesen angeschlossene Wischerblatt gesprüht, so dass die Waschflüssigkeit nur auf der Seite des Wischerarmes auf die Fahrzeugscheibe gesprüht wird, wo diese auch benötigt wird, und damit sparsam eingesetzt wird: Auch wird die Reinigungswirkung erhöht, da stets genügend Waschflüssigkeit vor dem Wischerblatt vorhanden ist.

Erfindungsgemäß ist die Waschflüssigkeitsleitung fahrzeugfest angeordnet. Das Verteilerelement ist mit dieser fest verbunden, wobei die Austrittsöffnung in ihrer radialen Ausrichtung quer zum Wischerarm angeordnet ist. Die Spritzkanäle sind dabei in einem Winkelabstand voneinander angeordnet, der kleiner als der Öffnungswinkel der Austrittsöffnung ist. Das drehfest mit der Wischerwelle verbundene Befestigungsteil des Wischerarmes ist von einer drehfest mit dieser verbundenen Abdeckkappe abgedeckt. An dieser ist innenseitig ein Steuerring mit zwei wischerarmseitig ausgebildeten Durchgangsöffnungen angeformt, die in einem Winkelabstand voneinander angeordnet sind, der kleiner als der Winkelabstand der Spritzkanäle ist. Dieser Steuerring greift in eine am Düsenkörper ausgebildete Ringnut ein und öffnet und schließt bei einer Pendelbewegung des Wischerarmes die Spritzkanäle. Dabei ist die Anordnung des Düsenkörpers so getroffen, dass dieser bei einer Bewegungsumkehr des Wischerarmes in einem vorbestimmten Winkelbereich relativ zum Steuerring verdreht wird.

Diese Relativverdrehung wird dadurch bewirkt, dass die Spritzkanäle des Düsenkörpers radial nach außen vorstehen und mit am Befestigungsteil des Wischerarmes ausgebildeten Anschlägen zusammenwirken. Die Anschläge sind an einem eine Befestigungsmutter aufnehmenden und diese umgebenden ringförmigen Randbereich des Befestigungsteils ausgebildet und bewirken, dass der Düsenkörper zeitverzögert der Bewegung des Wischerarmes folgt. Während der Zeitverzögerung erfolgt die Relativbewegung.

Vorteilhaft ist der Düsenkörper mit dem Verteilerelement verrastet, jedoch so, dass eine Relativbewegung zwischen diesen ermöglicht ist. Die Anordnung ist gemäß den Ansprüchen 6 und 7 durch Ringdichtungen abgedichtet, die einen Waschflüssigkeitsverlust verhindern. Die Ausführung nach Anspruch 8 hat den Vorteil, dass der besprühte Bereich vergrößert ist.

Die Erfindung wird nachstehend anhand eines Ausführungsbeispiels näher erläutert. In den zugehörigen Zeichnungen zeigen, vergrößert und teilweise schematisch:
- Fig. 1:: eine Spritzdüsenanordnung am wischerarmseitigen Ende einer einen Scheibenwischer antreibenden Wischerwelle in einem Längsschnitt, vergrößert,
- Fig. 2:: die Zuordnung eines Spritzdüsen tragenden Düsenkörpers zu dem Befestigungsteil des Scheibenwischers, iri der Art einer Explosionsdarstellung,

- Fig. 3:: einen Schnitt III - III durch die Spritzdüsenanordnung, vergrößert, und
- Fig. 4a bis f:: die Spritzdüsenanordnung bei einem Wisch-/ Waschvorgang in sechs aufeinanderfolgenden Wischerarmpositionen in der Schnittebene III - III.

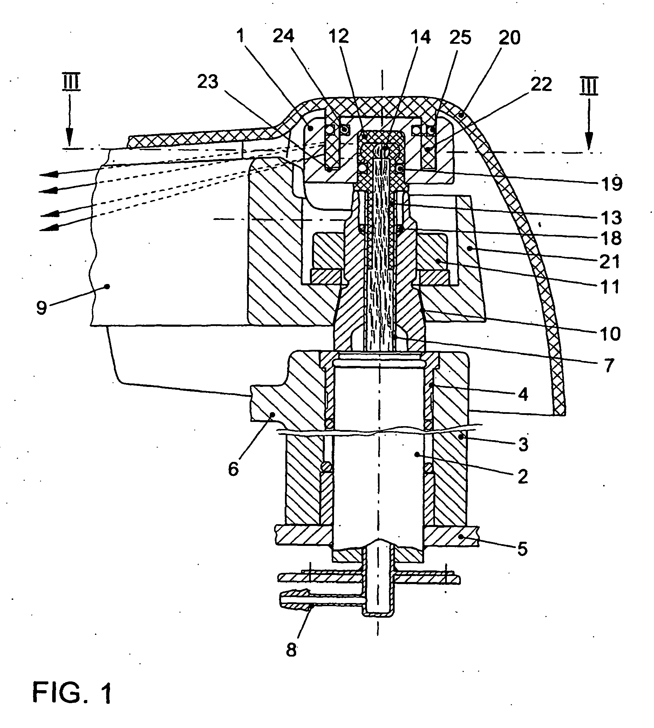

In Fig. 1 ist die Anordnung eines Düsenkörpers 1 am freien Ende einer Wischerwelle 2 als Bestandteil einer Scheibenreinigungsanlage dargestellt. Die Wischerwelle 2 ist in einem Lagerkörper 3 drehbar gelagert und in axialer Richtung durch die wischerarmseitige (in der Fig. obere) Lagerbuchse 4 und einem drehfest mit der Wischerwelle 2 verbundenen und diese pendelnd antreibenden Antriebsglied 5 fixiert. Der Lagerkörper 3 weist eine an diesem ausgebildete und angedeutete Befestigungslasche 6 zur Befestigung an der Fahrzeugkarosserie auf. In der Wischerwelle 2 ist ein fahrzeugfestes Messingröhrchen 7 als Waschflüssigkeitsleitung angeordnet, das an seinem karosserieseitigen Ende einen Schlauchanschlussstutzen 8 als Eingangsöffnung für die Waschflüssigkeit aufweist, über den dieses (7) mit einem Waschflüssigkeitsbehälter und einer Pumpe für die Waschflüssigkeit verbunden ist.

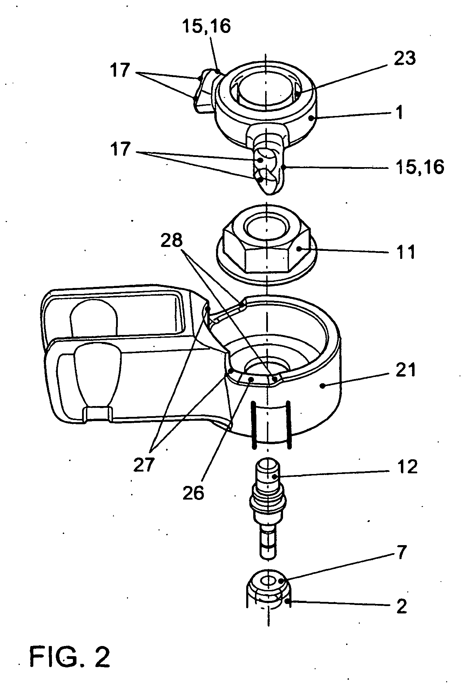

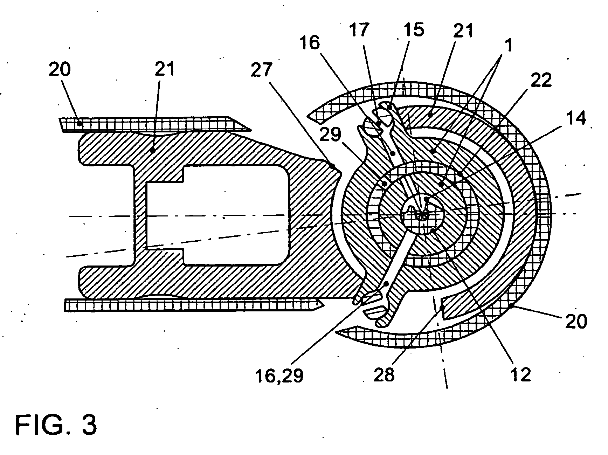

Auf der Seite des Wischerarmes 9, der an einem Befestigungskonus 10 mit einer Mutter 11 an der Wischerwelle 2 drehfest angeordnet ist, trägt das Messingröhrchen 7 einen hohlzylindrischen Verteilerkörper 12, der mit einem Ansatz 13 in dieses vorgespannt eingesteckt ist und eine Austrittsöffnung 14 aufweist, die in ihrer radialen Ausrichtung quer zum Wischerarm 9 angeordnet ist und einen Öffnungswinkel von 180° am Umfang des Verteilerkörpers 12 aufweist (Fig. 3). An dem Düsenkörper 1, der in bekannter Weise mit dem Verteilerkörper 12 drehbar verrastet ist (nicht dargestellt), sind wischerarmseitig zwei in Fig. 2 sichtbare, radial nach außen vorstehenden Ansätze 15 mit Spritzkanälen 16 in einem Winkel von 125° zueinander angeformt, von denen jeweils einer Seite des Wischerarmes 9 zugeordnet ist und die ausgangsseitig Spritzdüsen 17 zur Verteilung der Waschflüssigkeit abwechselnd auf eine der beiden Seiten des Wischerarmes 9 tragen.

Zwischen dem Messingröhrchen und der Wischerwelle 2 ist ein O-Ring 18 angeordnet, der einen Feuchtigkeitseintritt in axialer Richtung in das Fahrzeuginnere verhindert. Der Düsenkörper 1 ist gegenüber dem Verteilerkörper 12 durch einen O-Ring 19 abgedichtet, der in Fig. 1 unterhalb der Austrittsöffnung 14 in einer Umfangsringnut im Verteilerkörper 12 sitzt. Die Spritzdüsen- und Wischerarmbefestigungs-Anordnung ist durch eine Abdeckkappe 20 abgedeckt, die durch eine nicht dargestellte Verrastung mit dem Befestigungsteil 21 des Wischerarmes 9 am Befestigungskonus 10 drehfest verbunden ist.

An der Abdeckkappe 20 ist innenseitig ein Steuerring 22 mit zwei wischerarmseitig ausgebildeten Durchgangsöffnungen (29, Fig. 3) angeformt, die in einem Winkelabstand von 100° voneinander angeordnet und somit in einem kleineren Winkelabstand als der der Spritzkanäle 16 im Düsenkörper 1 angeordnet sind. Der Steuerring 22 greift in eine am Düsenkörper 1 ausgebildete Ringnut 23 ein und ist gegenüber diesem (1) durch zwei O-Ringe 24 und 25 abgedichtet.

Fig. 2 zeigt, dass am Befestigungsteil 21 durch zwei wischerarmseitige Absenkungen 26 in dem die Befestigungsmutter 11 aufnehmenden und diese umgebenden Randbereich wischeramseitige Anschläge 27 und wischerwellenseitige Anschläge 28 für die Ansätze 15 ausgebildet sind. Die Ansätze 15 ragen in radialer Ausrichtung in die Absenkungen 26 hinein, und der Düsenkörper 1 ist zwischen den Anschlägen 27 und 28 gegenüber dem Verteilerkörper 12 verdrehbar. Fig. 2 lässt auch erkennen, dass in den Ansätzen 15 jeweils zwei Spritzkanäle 16 ausgebildet sind, die ausgangsseitig jeweils eine Spritzdüse 17 tragen, die auf einer im Wesentlichen parallel zur Wischerwelle 2 verlaufenden Linie übereinander angeordnet sind.

Fig. 3 zeigt die Anordnung des Düsenkörpers 1 mit den Ansätzen 15, des Befestigungsteils 21 (für den mit diesem verbundenen Wischerarm 9) mit den Anschlägen 27 und 28, der Abdeckkappe 20 mit dem Steuerring 22 und dem Verteilerkörper 12 in einer vergrößerten Darstellung.

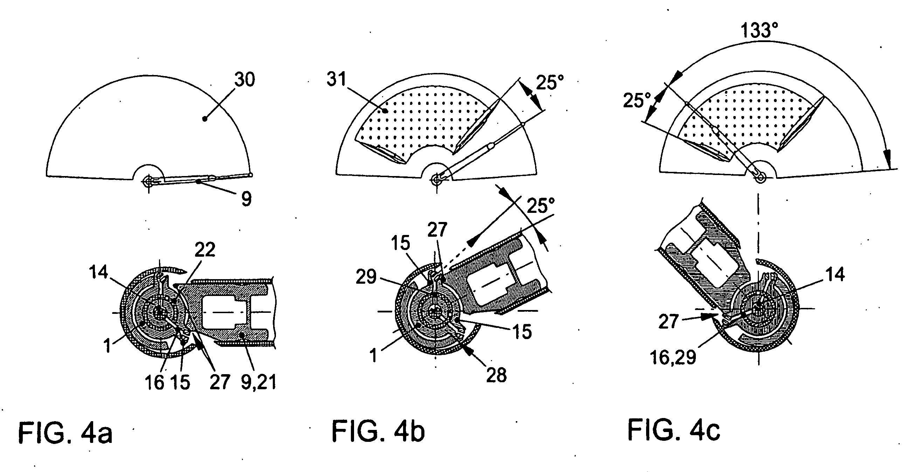

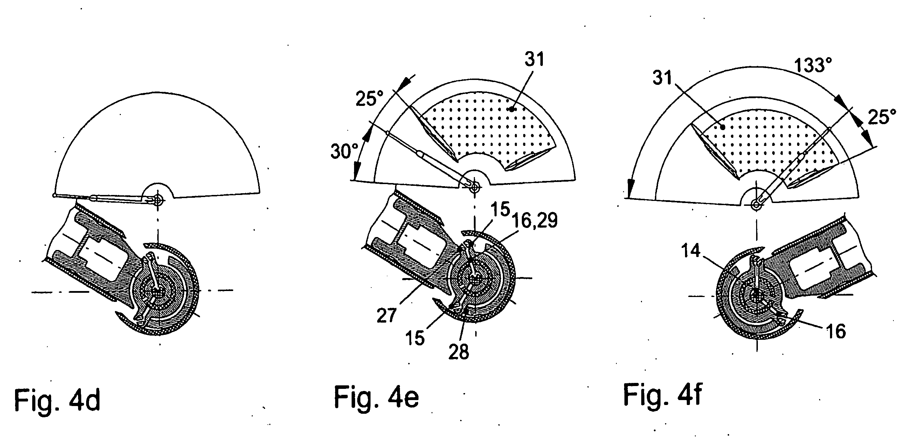

In den Fig. 4a bis f sind sechs aufeinanderfolgende Wischerarmstellungen bei einem Wisch-/Waschvorgang in der Schnittebene III - III dargestellt. Da die miteinander in Wirkverbindung stehenden Elemente der Spritzdüsenanordnung mit den entsprechenden Bezugszeichen in der Vergrößerung in Fig. 3 dargestellt sind, werden hier nur die zur Erläuterung der einzelnen Positionen notwendigen Bezugszeichen angegeben. Jeder Figur ist ein Wischfeld 30 zugeordnet, in dem für den Fall eines Waschmittelauftrages auf die Fahrzeugscheibe ein Benetzungsfeld 31 gekennzeichnet ist, das durch einen Waschflüssigkeitsauftrag erzeugt wird. Da der Waschflüssigkeitsdruck und der Winkel, mit dem die beiden Sprühstrahlen auf die Fahrzeugscheibe treffen, stets gleich ist, kann von einer im Wesentlichen gleichen Größe des Benetzungsfeldes ausgegangen werden.

Fig. 4a zeigt den Wischerarm 9 in einer Parkstellung, in der der Wischerarm 9 am rechten unteren Scheibenrand anliegt. Der untere Ansatz 15 mit dem Spritzkanal 16 des Düsenkörpers 1 liegt am unteren Anschlag 27 an. In dieser Stellung korrespondiert der Spritzkanal 16 nicht mit der Austrittsöffnung 14, und der obere Spritzkanal 16 ist durch den Steuerring 22 unterbrochen, so dass in dieser Stellung kein Waschflüssigkeitsauftrag auf die Fahrzeugscheibe erfolgen kann.

Wird der Scheibenwischer aus dieser Stellung im Gegenuhrzeigersinn herausgedreht, verharrt der Düsenkörper 1 zunächst in seiner Position, bis der obere Ansatz 15 von dem oberen Anschlag 27 und der untere Ansatz 15 von dem unteren Anschlag 28 erfasst wird (nach einer 25°-Drehung), wobei in dieser Position die obere Durchgangsöffnung 29 des Steuerringes 22 mit dem Spritzkanal 16 und der Austrittsöffnung 14 korrespondiert und Waschflüssigkeit bei einer Betätigung der Waschflüssigkeitspumpe ausgespritzt wird. Die Spritzdüsenanordnung ist so getroffen, dass der Waschflüssigkeitsstrahl im Winkel von 25° in der Schwenkrichtung vor den Wischerarm sprüht. Diese Position ist in Fig. 4b dargestellt. Die im Benetzungsfeld 31 vor dem Scheibenwischer (9) befindliche Waschflüssigkeit reicht für den Waschvorgang bis in die in Fig. 5d gezeigte Umkehrstellung aus.

Ab der in Fig. Fig. 4c dargestellten Position wird der Düsenträger 1 gemeinsam mit dem Wischerarm 9 verschwenkt, wobei ein Waschflüssigkeitsauftrag durch die Korrespondenz von Austrittsöffnung 14, Spritzkanal 16 und Durchgangsöffnung 29 bis zu einem Schwenkwinkel von 133° erfolgt, bei dem der Spritzkanal 16 von der Austrittsöffnung 14 weggedreht und der Waschflüssigkeitsstrom unterbunden wird. Die 133°-Position ist in Fig. 4c gezeigt.

Der Wischerarm wird in der Folge weiter bis in die in Fig. 4d gezeigte Umkehrposition, die auch in Fig. 3 gezeigt ist, geschwenkt, ohne dass Waschflüssigkeit gesprüht werden kann, da es keine durchgehende Verbindung vom Verteilerkörper 12 zu den Spritzdüsen 17 gibt.

In der Folge wird der Scheibenwischer im Uhrzeigersinn verschwenkt. Fig. 4e zeigt die Stellung, in der der obere Anschlag 27 am oberen Ansatz 15 des Düsenkörpers 1 und der untere Anschlag 28 am unteren Ansatz 15 anschlägt, was bei einer Verschwenkung um etwa 30° erfolgt. In dieser Position gelangt die obere Durchgangsöffnung 29 in Korrespondenz mit dem oberen Spritzkanal 16 und der Austrittsöffnung 14, und der Weg für die Waschflüssigkeit ist frei. Die durch die beiden übereinander angeordneten Spritzdüsen ausgesendeten Waschflüssigkeitsstrahlen treffen im Winkel von 25° in der Schwenkrichtung des Scheibenwischers vor diesem auf die Fahrzeugscheibe. Bei einem Schwenkwinkel von 133° (Fig. 4e) wird der untere Spritzkanal 16 von der Austrittsöffnung 14 weggedreht, und der Waschflüssigkeitsstrom ist unterbrochen, wobei das Benetzungsfeld 31 25° vor dieser Position endet. Die im Benetzungsfeld 31 in der Bewegungsrichtung vor dem Scheibenwischer befindliche Waschflüssigkeit reicht für den weiteren Waschvorgang bis in die Parkstellung (Fig. 5a) aus.

### Bezugszeichenliste

- 1: Düsenkörper
- 2: Wischerwelle
- 3: Lagerkörper
- 4: Lagerbuchse
- 5: Antriebsglied
- 6: Befestigungslasche
- 7: Messingröhrchen
- 8: Schlauchanschlussstutzen
- 9: Wischerarm
- 10: Befestigungskonus
- 11: Mutter
- 12: Verteilerkörper
- 13: Ansatz
- 14: Austrittsöffnung
- 15: Ansatz
- 16: Spritzkanal
- 17: Spritzdüse
- 18: O-Ring
- 19: O-Ring
- 20: Abdeckkappe
- 21: Befestigungsteil
- 22: Steuerring
- 23: Ringnut
- 24: O-Ring
- 25: O-Ring
- 26: Absenkung
- 27: Anschlag
- 28: Anschlag
- 29: Durchgangsöffnung
- 30: Wischfeld
- 31: Benetzungsfeld

## Patentansprüche

1. Scheibenreinigungsanlage für Fahrzeuge, mit wenigstens einem Wischerarm (9) und einer in einem Wischenwellenlager gelagerten, pendelnd angetriebenen und als Hohlwelle ausgebildeten Wischerwelle (2) zum Antrieb des Wischerarmes (9), einer in dieser angeordneten Waschflüssigkeitsleitung (7) und einer Spritzdüsenanordnung im Bereich des wischerarmseitigen Endes der Wischerwelle (2), wobei der Waschflüssigkeitsleitung (7) am Ende der Wischerwelle (2) ein Verteilerelement (12) mit einer umfangsseitig angeordneten und einen vorbestimmten Öffnungswinkel aufweisenden Austrittsöffnung (14) zugeordnet ist, wobei das Verteilerelement (12) mit einem koaxial zu diesem angeordneten Düsenkörper (1) in Wirkverbindung steht, der der Austrittsöffnung (14) zugeordnete Spritzkanäle (16) mit ausgangsseitig eingesetzten Spritzdüsen (17) zum Spritzen der Waschflüssigkeit abwechselnd auf jeweils den Bereich der Fahrzeugscheibe aufweist, der in der Bewegungsrichtung des Wischerarmes (9) vor diesem liegt, und wobei der Düsenkörper (1) bei einer Antriebsbewegung der Wischerwelle (2) relativ und derart zum Verteilerelement (12) verdreht wird, dass jeweils die auf einen Bereich vor den bewegten Wischerarm (9) gerichtete Spritzdüse (17) mit der Austrittsöffnung (14) in einem vorbestimmten Schwenkwinkelbereich verbunden ist,
**dadurch gekennzeichnet, dass** die Waschflüssigkeitsleitung (7) fahrzeugfest angeordnet ist und das Verteilerelement (12) trägt, wobei dessen Austrittsöffnung (14) in ihrer radialen Ausrichtung quer zum Wischerarm (9) angeordnet ist, wobei die Spritzkanäle (16) in einem Winkelabstand voneinander angeordnet sind, der kleiner als der Öffnungswinkel der Austrittsöffnung (14) ist, dass ein drehfest mit der Wischerwelle (2) verbundenes Befestigungsteil (21) des Wischerarmes (9) von einer drehfest mit diesem verbundenen Abdeckkappe (20) abgedeckt ist, an der innenseitig ein Steuerring (22) mit zwei wischerarmseitig ausgebildeten Durchgangsöffnungen (29) angeformt ist, die in einem Winkelabstand voneinander angeordnet sind, der kleiner als der Winkelabstand der Spritzkanäle (16) ist, dass der Steuerring in eine am Düsenkörper (1) ausgebildete Ringnut (23) eingreift und die Spritzkanäle (16) abwechselnd öffnet und schließt, und dass der Steuerring (22) bei einer Bewegungsumkehr des Wischerarmes (9) in einem vorbestimmten Winkelbereich gegenüber dem Düsenkörper (1) verdreht wird.

2. Scheibenreinigungsanlage nach Anspruch 1, **dadurch gekennzeichnet, dass** die Spritzkanäle (16) des Düsenkörpers (1) radial nach außen vorstehen und mit am Befestigungsteil (21) des Wischerarmes (9) ausgebildeten Anschlägen (27, 28) zusammenwirken, derart, das der Düsenkörper (1) zeitverzögert der Bewegung des Wischerarmes (9) folgt.

3. Scheibenreinigungsanlage nach Anspruch 2, **dadurch gekennzeichnet, dass** die Anschläge (27, 28) an einem eine Befestigungsmutter (11) aufnehmenden und diese umgebenden ringförmigen Randbereich des Befestigungsteils (21) ausgebildet sind.

4. Scheibenreinigungsanlage nach Anspruch 1, **dadurch gekennzeichnet, dass** der Düsenkörper (1) mit dem Verteilerelement (12) drehbar verrastet ist.

5. Scheibenreinigungsanlage nach Anspruch 4, **dadurch gekennzeichnet, dass** zwischen dem Düsenkörper (1) und dem Verteilerelement (12) auf der der Wischerwelle (2) zugewandten Seite der Austrittsöffnung (14) eine Ringdichtung (19) angeordnet ist.

6. Scheibenreinigungsanlage nach Anspruch 1, **dadurch gekennzeichnet, dass** zwischen dem Düsenkörper (1) und dem Steuerring (22) auf der der Wischerwelle (2) abgewandten Seite der Durchgangsöffnungen (29) bzw. der Spritzkanäle (16) jeweils eine Ringdichtung (24, 25) angeordnet ist.

7. Scheibenreinigungsanlage nach Anspruch 1, **dadurch gekennzeichnet, dass** einem Spritzkanal (16) jeweils zwei Spritzdüsen (17) zugeordnet sind.

8. Scheibenreinigungsanlage nach Anspruch 2, **dadurch gekennzeichnet, dass** die Spritzdüsen (17) auf einer im Wesentlichen parallel zur Wischerwelle (2) verlaufenden Linie angeordnet sind.

## Claims

1. Pane-cleaning system for vehicles, having at least one wiper arm (9) and a wiper shaft (2) which is mounted in a wiper-shaft bearing, is driven in an oscillating manner and is configured as a hollow shaft for driving the wiper arm (9), a washing-liquid line (7) which is arranged in the said wiper shaft (2), and a spray-nozzle arrangement in the region of the wiper arm-side end of the wiper shaft (2), the washing-liquid line (7) being assigned, at the end of the wiper shaft (2), a distributor element (12) with an outlet opening (14) which is arranged on the circumferential side and has a predefined opening angle, the distributor element (12) being operatively connected to a nozzle body (1) which is arranged coaxially with respect to the said distributor element (12) and has spray channels (16) which are assigned to the outlet opening (14) with spray nozzles (17) which are inserted on the outlet side for spraying the washing liquid alternately onto in each case that region of the vehicle pane which lies in front of the wiper arm (9) in the movement direction of the latter, and, in the case of a drive movement of the wiper shaft (2), the nozzle body (1) being rotated relative to the distributor element (12) in such a way that in each case the spray nozzle (17) which is directed onto a region in front of the moving wiper arm (9) is connected to the outlet opening (14) in a predefined pivoting-angle range,
**characterized in that** the washing-liquid line (7) is arranged in a manner which is fixed to the vehicle and carries the distributor element (12), the outlet opening (14) of which is arranged in its radial orientation transversely with respect to the wiper arm (9), the spray channels (16) being arranged at an angular spacing from one another which is smaller than the opening angle of the outlet opening (14), **in that** a fastening part (21) of the wiper arm (9), which fastening part (21) is connected fixedly to the wiper shaft (2) so as to rotate with it, is covered by a covering cap (20) which is connected fixedly to the former so as to rotate with it and on the inner side of which a control ring (22) is moulded integrally with two through openings (29) which are formed on the wiper-arm side and are arranged at an angular spacing from one another which is smaller than the angular spacing of the spray channels (16), **in that** the control ring engages into an annular groove (23) formed on the nozzle body (1) and alternately opens and closes the spray channels (16), and **in that**, in the case of a movement reversal of the wiper arm (9), the control ring (22) is rotated in a predefined angular range with respect to the nozzle body (1).

2. Pane-cleaning system according to Claim 1, **characterized in that** the spray channels (16) of the nozzle body (1) project radially to the outside and interact with stops (27, 28) which are formed on the fastening part (21) of the wiper arm (9), in such a way that the nozzle body (1) follows the movement of the wiper arm (9) in a temporally delayed manner.

3. Pane-cleaning system according to Claim 2, **characterized in that** the stops (27, 28) are formed on an annular edge region of the fastening part (21), which annular edge region receives a fastening nut (11) and surrounds it.

4. Pane-cleaning system according to Claim 1, **characterized in that** the nozzle body (1) is latched rotatably to the distributor element (12).

5. Pane-cleaning system according to Claim 4, **characterized in that** an annular seal (19) is arranged between the nozzle body (1) and the distributor element (12) on that side of the outlet opening (14) which faces the wiper shaft (2).

6. Pane-cleaning system according to Claim 1, **characterized in that** in each case one annular seal (24, 25) is arranged between the nozzle body (1) and the control ring (22) on that side of the through openings (29) and of the spray channels (16) which faces away from the wiper shaft (2).

7. Pane-cleaning system according to Claim 1, **characterized in that** one spray channel (16) is assigned in each case two spray nozzles (17).

8. Pane-cleaning system according to Claim 2, **characterized in that** the spray nozzles (17) are arranged on a line which extends substantially parallel to the wiper shaft (2).

## Revendications

1. Unité de lavage de vitres pour véhicules, avec au moins un bras d'essuyage (9) et un arbre d'essuyage (2) disposé dans un support d'arbre d'essuyage, entraîné de façon pendulaire et réalisé sous la forme d'un arbre creux pour entraîner le bras d'essuyage (9), d'une conduite de liquide de lavage (7) disposée dans celui-ci et d'un dispositif gicleur placé dans la zone de l'extrémité de l'arbre d'essuyage (2) dans la zone située du côté du bras d'essuyage, un élément de distribution (12) muni d'une ouverture de sortie (14) disposée côté périphérie et présentant un angle d'ouverture prédéfini étant associé à la conduite de liquide de lavage (7) disposée au niveau de l'extrémité de l'arbre d'essuyage (2), l'élément de distribution (12) étant associé activement à un corps de buse (1) disposé coaxialement par rapport à celui-ci, celui-ci comportant des canaux gicleurs (16) associés à l'ouverture de sortie (14) avec des buses gicleuses (17) encastrées côté sortie pour faire gicler le liquide de lavage de façon alternative sur respectivement la zone de la vitre du véhicule se trouvant devant elle dans la direction de déplacement du bras d'essuyage (9) et le corps de buse (1) étant pivoté de façon relative en présence d'un mouvement d'entraînement de l'arbre d'essuyage (2) par rapport à l'élément de distribution (12) de telle sorte que respectivement la buse gicleuse (17) orientée sur une zone positionnée devant le bras d'essuyage (9) déplacé est reliée à l'ouverture de sortie (14) selon un angle de pivotement prédéfini, **caractérisé en ce que** la conduite de liquide de lavage (7) est disposée fixement sur le véhicule et supporte l'élément de distribution (12), son ouverture de sortie (14) étant disposée dans son orientation radiale transversalement par rapport au bras d'essuyage (9), les canaux gicleurs (16) étant disposés selon un certain écartement angulaire inférieur à l'angle d'ouverture de l'ouverture de sortie (14), qu'une partie de fixation (21) du bras d'essuyage (9) reliée fixement sans rotation avec l'arbre d'essuyage (2) est recouverte par un cache de recouvrement (20) relié fixement sans rotation à lui et au niveau du côté intérieur duquel une bague de commande (22) est réalisée avec deux ouvertures de passage (29) réalisées côté bras d'essuyage, lesdites ouvertes étant disposées selon un écartement angulaire inférieur à l'écartement angulaire des canaux gicleurs (16), que la bague de commande s'engrène dans une rainure annulaire (23) réalisée au niveau du corps de buse (1) et ouvrant et fermant les canaux gicleurs (16) de façon alternée et que la bague de commande (22) est tournée en cas d'inversion du mouvement du bras d'essuyage (9) dans une zone angulaire prédéfinie par rapport au corps de buse (1).

2. Unité de lavage de vitres selon la revendication 1, **caractérisée en ce que** les canaux gicleurs (16) du corps de buse (1) ressortent radialement vers l'extérieur et interagissent avec les butées (27, 28) réalisées au niveau de la partie de fixation (21) du bras d'essuyage (9), de telle sorte que le corps de buse (1) suit de façon décalée dans le temps le mouvement du bras d'essuyage (9).

3. Unité de lavage de vitres selon la revendication 2, **caractérisée en ce que** les butées (27, 28) sont réalisées au niveau d'une zone de bordure de forme annulaire de la partie de fixation (21) logeant un écrou de fixation (11) et l'entourant.

4. Unité de lavage de vitres selon la revendication 1, **caractérisée en ce que** le corps de buse (1) s'encliquète en rotation avec l'élément de distribution (12).

5. Unité de lavage de vitres selon la revendication 4, **caractérisée en ce qu'**entre le corps de buse (1) et l'élément de distribution (12), un joint annulaire (19) est disposé sur le côté de l'ouverture de sortie (14) orienté vers l'arbre d'essuyage (2).

6. Unité de lavage de vitres selon la revendication 1, **caractérisée en ce qu'**entre le corps de buse (1) et la bague de commande (22), un joint annulaire (24, 25) est respectivement disposé sur le côté des ouvertures de passage (29) et/ou des canaux gicleurs (16) opposé à l'arbre d'essuyage (2).

7. Unité de lavage de vitres selon la.. revendication 1, **caractérisé en ce que** deux buses gicleuses (17) sont respectivement associées à deux canaux gicleurs (16).

8. Unité de lavage de vitres selon la revendication 2, **caractérisée en ce que** les buses gicleuses (17) sont disposées sur une ligne s'étendant pour l'essentiel parallèlement à l'arbre d'essuyage (2).
